# EUROPÄISCHE PATENTSCHRIFT

(11) **EP 2 411 551 B1**
(45) Veröffentlichungstag und Bekanntmachung des Hinweises auf die Patenterteilung: **19.11.2014**
(21) Anmeldenummer: 10707225.8
(22) Anmeldetag: 05.03.2010
(51) Int. Cl.: C22C 9/04

(54) **KUPFER-ZINK-LEGIERUNG**
COPPER - ZINC - ALLOY
ALLIAGE À BASE DE CUIVRE ET ZINC

(30) Priorität: 27.03.2009 DE 102009014760
(43) Veröffentlichungstag der Anmeldung: 01.02.2012
(73) Patentinhaber: Diehl Metall Stiftung & Co. KG, 90552 Röthenbach (DE)
(72) Erfinder: GAAG, Norbert, 91207 Lauf (DE); GEISE, Jürgen, 90480 Nürnberg (DE); GEBHARD, Friedrich, 91207 Lauf/Peg (DE)
(74) Vertreter: Diehl Patentabteilung
(86) Internationale Anmeldenummer: PCT/EP2010/001369
(87) Internationale Veröffentlichungsnummer: WO 2010/108587

(56) Entgegenhaltungen:
- EP-A1- 0 313 036
- DE-A1- 3 809 994
- DE-A1- 19 539 498
- DE-A1-102005 059 391

## Beschreibung

Die Erfindung betrifft eine Kupfer-Zink-Legierung zur Herstellung von Halbzeugen mit einem hohen Reibungsbeiwert, insbesondere Synchronringen.

Eine solche Kupfer-Zink-Legierung ist aus der DE 37 35 783 C1 bekannt. - In der Praxis hat es sich gezeigt, dass unter Verwendung der bekannten Kupfer-Zink-Legierung hergestellte Synchronringe in ihren Verschleißwerten relativ stark streuen. Infolgedessen ist es schwierig, deren Lebensdauer zu bestimmen.

Aufgabe der Erfindung ist es, die Nachteile nach dem Stand der Technik zu beseitigen. Es soll insbesondere eine Kupfer-Zink-Legierung angegeben werden, deren Verschleißwerte sich durch eine möglichst geringe Streuung auszeichnen.

Diese Aufgabe wird durch die Merkmale der Ansprüche 1 und 9 gelöst. Zweckmäßige Ausgestaltungen der Erfindung ergeben sich aus den Merkmalen der abhängigen Ansprüche.

Nach Maßgabe der Erfindung wird vorgeschlagen, zusätzlich 0,001 bis 0,01% Ti zuzusetzen. Es hat sich überraschenderweise herausgestellt, dass der vorgeschlagene Zusatz an Ti eine Erhöhung des Verschleißwerts bewirkt und gleichzeitig zu einer besonders geringen Schwankung in den Verschleißwerten beiträgt. Damit lässt sich die Lebensdauer, insbesondere eines aus der vorgeschlagenen Kupfer-Zink-Legierung hergestellten Synchronrings, mit verbesserter Genauigkeit vorherbestimmen.

Nach einer vorteilhaften Ausgestaltung ist vorgesehen, dass der Gehalt an Ti 0,001 bis 0,008% beträgt. Mit dem vorgeschlagenen Gehalt an Ti kann insbesondere eine Schwankungsbreite in den Verschleißwerten besonders gering gehalten werden.

Weitere vorteilhafte Ausgestaltungen der Legierung ergeben sich aus den Merkmalen der Ansprüche 3 bis 8. Legierungen mit den dort erwähnten Merkmalen zeichnen sich vor allem durch eine Verbesserung im Verschleißwert und/oder eine Verringerung der Schwankungsbreite des Verschleißwerts aus.

Im Sinne der vorliegenden Erfindung wird unter "%" Gewichts-% verstanden.

Nach weiterer Maßgabe der Erfindung ist die Verwendung der vorgeschlagenen Kupfer-Zink-Legierung zur Herstellung von Synchronringen vorgesehen.

Nachfolgend werden Ausführungsbeispiele der Erfindung näher erläutert.

In der folgenden Tabelle ist der Verschleißwiderstand verschiedener Versuchslegierungen (= Leg.) wiedergegeben. Unter dem Verschleißwiderstand wird im Sinne der vorliegenden Erfindung eine prozentuale Angabe des Verschleißwerts der jeweiligen Versuchslegierung gegenüber der mit der Nr. 2431 (= 488 Referenz) bezeichneten Versuchs- bzw. Referenzlegierung verstanden. Die Referenzlegierung Nr. 2431 weist die folgende Zusammensetzung auf: Cu 55%, Ni 7%, Al 3,8%, Si 2,3%, Fe 0,7%, Rest Zn sowie unvermeidbare Verunreinigen.

Die Messung des Verschleißwiderstands ist auf der Grundlage der folgenden Parameter erfolgt:

| | |
|---|---|
| Rauigkeit des Laufrings: | 2,14 - 2,93 µm |
| Belastung: | 52 N/mm² |
| Umdrehung/Minute: | 900 |
| Ölsorte: | Spirax/Fususöl = 3:1 |
| Strecke: | 2500 m |
| Temperatur: | 95°C |

| **Leg. Nr.** | **Legierungselement (Zugabe zu Nr. 2431)** | **Verschleißwiderstand in % Serie 1** | **Verschleißwiderstand in % Serie 2** | **Mittelwert MW** |
|---|---|---|---|---|
| 2431 | = 488 Referenz | 100 | 100 | 100 |
| 2432 | + 0,02% Sn | 144 | 166 | 155 |
| 2433 | + 0,04% Sn | 81 | 83 | 82 |
| 2434 | + 0,08% Sn | 162 | 133 | 147 |
| 2435 | + 0,2% Sn | 162 | 181 | 171 |
| 2436 | + 0,5% Sn | 200 | 133 | 166 |
| 2437 | + 0,002% Ti | 130 | 117 | 130 |
| 2438 | + 0,004% Ti | 130 | 117 | 123 |
| 2449 | + 0,006% Ti | 140 | 126 | 133 |
| 2439 | + 0,008% Ti | 152 | 142 | 147 |
| 2440 | + 0,02% Ti | 185 | 111 | 148 |
| 2441 | + 0,05% Ti | 185 | 105 | 145 |
| 2442 | + 0,1% Ti | 200 | 142 | 171 |
| 2443 | + 0,002% Cr | 89 | 105 | 97 |
| 2444 | + 0,004% Cr | 130 | 105 | 117 |
| 2445 | + 0,008% Cr | 136 | 95 | 115 |
| 2446 | + 0,02% Cr | 185 | - | 185 |
| 2447 | + 0,05% Cr | 162 | 90 | 126 |
| 2448 | + 0.1 % Cr | 96 | 133 | 114 |

Die aus der Tabelle ersichtlichen Versuchslegierungen umfassen als Legierungselement Sn (Legierungen Nr. 2432-2436), Ti (Legierungen Nr. 2437-2442 & 2449) sowie Cr (Legierungen Nr. 2443-2448).

Die meisten der untersuchten Versuchslegierungen weisen im Vergleich zur Referenzlegierung Nr. 2431 einen verbesserten Verschleißwiderstand auf. Insbesondere bei der Verwendung von Sn und Cr zeigt sich allerdings eine relativ große Schwankungsbreite in den Verschleißwerten. Insbesondere bei der Verwendung von Ti mit einem Gehalt von 0,02% bis 0,008% ergibt sich im Vergleich zur Referenzlegierung eine Verbesserung im Verschleißwiderstand und gleichzeitig eine besonders geringe Schwankungsbreite des Verschleißwiderstands von ± 13%, wie aus einem Vergleich der Verschleißwiderstandsserien 1 und 2 ersichtlich ist.

## Patentansprüche

1. Kupfer-Zink-Legierung zur Herstellung von Halbzeugen mit einem hohen Reibungsbeiwert, insbesondere Synchronringen, mit folgenden Bestandteilen:
50 bis 65% Cu,
1 bis 6% Al,
0,5 bis 5% Si,
5 bis 8% Ni,
0 bis 1 % Fe,
0 bis 2% Pb,
Rest Zn sowie unvermeidbare Verunreinigungen,
**dadurch gekennzeichnet, dass**
0,001 bis 0,01% Ti zugesetzt sind.

2. Kupfer-Zink-Legierung nach Anspruch 1, wobei der Gehalt an Ti 0,001 bis 0,008% beträgt.

3. Kupfer-Zink-Legierung nach einem der vorhergehenden Ansprüche, wobei der Gehalt an Cu 55 bis 60%, vorzugsweise 56 bis 59%, beträgt.

4. Kupfer-Zink-Legierung nach einem der vorhergehenden Ansprüche, wobei der Gehalt Al 3 bis 5% Al, vorzugsweise 3,5 bis 4,5%, beträgt.

5. Kupfer-Zink-Legierung nach einem der vorhergehenden Ansprüche, wobei der Gehalt an Si 1 bis 3%, vorzugsweise 1 bis 2%, beträgt.

6. Kupfer-Zink-Legierung nach einem der vorhergehenden Ansprüche, wobei der Gehalt an Ni 5,5 bis 7%, vorzugsweise 5,5 bis 6,5%, beträgt.

7. Kupfer-Zink-Legierung nach einem der vorhergehenden Ansprüche, wobei der Gehalt an Fe 0 bis 1%, vorzugsweise 0,6 bis 0,8%, beträgt.

8. Kupfer-Zink-Legierung nach einem der vorhergehenden Ansprüche, wobei der Gehalt an Pb 0 bis 1 % beträgt.

9. Verwendung der Kupfer-Zink-Legierung nach einem der vorhergehenden Ansprüchen zur Herstellung von Synchronringen.

## Claims

1. Copper-zinc alloy for producing semi-finished products with a high coefficient of friction, in particular synchronizer rings, comprising the following constituents:
50 to 65% Cu,
1 to 6% Al,
0.5 to 5% Si,
5 to 8% Ni,
0 to 1% Fe,
0 to 2% Pb,
remainder Zn and unavoidable impurities,
**characterized in that**
0.001 to 0.01% Ti is added.

2. Copper-zinc alloy according to Claim 1, wherein the Ti content is 0.001 to 0.008%.

3. Copper-zinc alloy according to either of the preceding claims, wherein the Cu content is 55 to 60%, preferably 56 to 59%.

4. Copper-zinc alloy according to one of the preceding claims, wherein the Al content is 3 to 5%, preferably 3.5 to 4.5%.

5. Copper-zinc alloy according to one of the preceding claims, wherein the Si content is 1 to 3%, preferably 1 to 2%.

6. Copper-zinc alloy according to one of the preceding claims, wherein the Ni content is 5.5 to 7%, preferably 5.5 to 6.5%.

7. Copper-zinc alloy according to one of the preceding claims, wherein the Fe content is 0 to 1%, preferably 0.6 to 0.8%.

8. Copper-zinc alloy according to one of the preceding claims, wherein the Pb content is 0 to 1%.

9. Use of the copper-zinc alloy according to one of the preceding claims for producing synchronizer rings.

## Revendications

1. Alliage à base de cuivre et zinc destiné à la fabrication de demi-produits présentant un coefficient de frottement élevé, en particulier des bagues de synchronisation, avec les composants suivants:
50 à 65 % Cu,
1 à 6 % Al,
0,5 à 5 % Si,
5 à 8 % Ni,
0 à 1 % Fe,
0 à 2 % Pb,
le reste étant du zinc ainsi que des impuretés inévitables, **caractérisé en ce que** l'on a ajouté 0,001 à 0,01 % Ti.

2. Alliage à base de cuivre et zinc selon la revendication 1, dans lequel la teneur en Ti vaut 0,001 à 0,008 %.

3. Alliage à base de cuivre et zinc selon l'une quelconque des revendications précédentes, dans lequel la teneur en Cu vaut 55 à 60 %, de préférence 56 à 59 %.

4. Alliage à base de cuivre et zinc selon l'une quelconque des revendications précédentes, dans lequel la teneur en Al vaut 3 à 5 %, de préférence 3,5 à 4,5 %.

5. Alliage à base de cuivre et zinc selon l'une quelconque des revendications précédentes, dans lequel la teneur en Si vaut 1 à 3 %, de préférence 1 à 2 %.

6. Alliage à base de cuivre et zinc selon l'une quelconque des revendications précédentes, dans lequel la teneur en Ni vaut 5,5 à 7 %, de préférence 5,5 à 6,5 %.

7. Alliage à base de cuivre et zinc selon l'une quelconque des revendications précédentes, dans lequel la teneur en Fe vaut 0 à 1 %, de préférence 0,6 à 0,8%.

8. Alliage à base de cuivre et zinc selon l'une quelconque des revendications précédentes, dans lequel la teneur en Pb vaut 0 à 1 %.

9. Utilisation de l'alliage à base de cuivre et zinc selon l'une quelconque des revendications précédentes, pour la fabrication de bagues de synchronisation.
